# EUROPEAN PATENT APPLICATION

(11) **EP 4 586 687 A1**
(43) Date of publication of application: **16.07.2025**
(21) Application number: 23876248.8
(22) Date of filing: 29.06.2023
(51) Int. Cl.: H04W 36/00

(54) **INFORMATION TRANSMISSION METHOD AND COMMUNICATION APPARATUS**

(30) Priority: 14.10.2022 CN 202211258769
(71) Applicant: Huawei Technologies Co., Ltd., Shenzhen, Guangdong 518129 (CN)
(72) Inventor: WANG, Yu, Shenzhen, Guangdong 518129 (CN); QIAO, Yunfei, Shenzhen, Guangdong 518129 (CN); ZHANG, Jiayin, Shenzhen, Guangdong 518129 (CN); YU, Tianhang, Shenzhen, Guangdong 518129 (CN); WANG, Xiaolu, Shenzhen, Guangdong 518129 (CN)
(74) Representative: Pfenning, Meinig & Partner mbB
(86) International application number: PCT/CN2023/104207
(87) International publication number: WO 2024/078039

(57) **Abstract**

This application provides an information transmission method and a communication apparatus. The method includes: A terminal device obtains first information in a first cell, where the first information indicates a first network device, the first information is broadcast information from the first network device, and the first network device is one of at least one network device that manages the first cell (S701); and the terminal device determines, based on the first information, whether a serving network device of the terminal device in the first cell changes (S702), and obtains system information from the first network device when the serving network device in the first cell changes (S703). In this way, the terminal device can learn in time that the serving network device in the first cell changes, so that communication reliability of the terminal device can be improved.

## Description

This application claims priority to Chinese Patent Application No. 202211258769.4, filed with the China National Intellectual Property Administration on October 14, 2022 and entitled "INFORMATION TRANSMISSION METHOD AND COMMUNICATION APPARATUS", which is incorporated herein by reference in its entirety.

### TECHNICAL FIELD

This application relates to the communication field, and more specifically, to an information transmission method and a communication apparatus.

### BACKGROUND

A non-terrestrial communication network includes nodes such as a satellite network, a highaltitude platform, and an unmanned aerial vehicle, has significant advantages such as global coverage, long-distance transmission, flexible networking, convenient deployment, and free from geographical restrictions, and has been widely applied to a plurality of fields such as maritime communication, disaster relief, video broadcasting, and earth observation.

However, different from a terrestrial communication network, a network device in the non-terrestrial communication network may be deployed in the air (for example, in a low-earth orbit), and a relative position between the network device and the ground is time-varying. Consequently, a mobility management mechanism in the terrestrial communication network cannot be directly applied to the non-terrestrial communication network, and a mobility management mechanism of a terminal device that matches the non-terrestrial communication network needs to be designed.

### SUMMARY

Embodiments of this application provide an information transmission method and a communication apparatus, to improve communication reliability of a terminal device.

According to a first aspect, an information transmission method is provided. The method may be performed by a terminal device or a module (for example, a chip or a chip module) configured (or used) in the terminal device. The following uses an example in which the terminal device performs the method for description.

The method includes: The terminal device obtains first information in a first cell, where the first information indicates a first network device, the first information is broadcast information from the first network device, and the first network device is one of at least one network device that manages the first cell; and the terminal device determines, based on the first information, whether a serving network device of the terminal device in the first cell changes, and the terminal device obtains system information from the first network device when the serving network device in the first cell changes.

According to the foregoing solution, when a plurality of network devices serve different areas of a cell, the network device broadcasts, in the cell, broadcast information indicating the network device, so that the terminal device can learn in time that a serving network device in the cell changes, to obtain related information of a changed serving network device. In this way, the changed serving network device provides a communication service for the terminal device, so that communication continuity of the terminal device can be improved, and communication reliability can be provided.

The terminal device may be a terminal device in an idle state (for example, an RRC-Idle state). However, this application is not limited thereto. The terminal device may alternatively be in an inactive state (for example, an RRC-Inactive state) or a connected state (for example, an RRC-Connected state).

With reference to the first aspect, in some implementations of the first aspect, the first information is carried on a synchronization signal and/or a physical broadcast channel.

For example, the first information may be a sequence of the synchronization signal, and sequences of synchronization signals of different network devices (or a plurality of adjacent network devices) are different. Alternatively, the first information may be a scrambling code sequence of the synchronization signal or a scrambling code sequence of information on the physical broadcast channel. Alternatively, the first information may be a field on the physical broadcast channel.

According to the foregoing solution, the terminal device may obtain the first information by detecting the synchronization signal and/or the physical broadcast channel, to determine, in time, whether the serving network device changes, so as to update the related information of the serving network device in time. If no change occurs, the terminal device does not need to further obtain other information, so that unnecessary power consumption of the terminal device can be reduced.

With reference to the first aspect, in some implementations of the first aspect, the first information includes a first identifier or a second identifier, the first identifier is an identifier of the first network device, and the second identifier is a group identifier of a broadcast signal group to which a broadcast signal sent by the first network device in the first cell belongs.

With reference to the first aspect, in some implementations of the first aspect, the system information includes one or more of the following:
ephemeris information of the first network device;
paging resource configuration information of the first network device; and
configuration information of the synchronization signal sent by the first network device in the first cell.

According to the foregoing solution, when the terminal device determines that the serving network device in the first cell changes to the first network device, the terminal device may obtain the ephemeris information of the first network device, to perform time-frequency synchronization with the network device and the like, so as to obtain a communication service of the network device. The terminal device may obtain the paging resource configuration information, so that the terminal device can detect a paging message on a paging resource. In addition, the terminal device may obtain the configuration information of the synchronization signal, for example, an SSB-based measurement timing configuration SMTC, and the terminal device may measure signal quality based on the SMTC.

With reference to the first aspect, in some implementations of the first aspect, that the terminal device obtains first information in a first cell includes: The terminal device receives second information, where the second information includes time information and/or reference point position information for the terminal device to perform serving network device reselection in the first cell; and the terminal device obtains the first information in the first cell based on the second information.

According to the foregoing solution, the terminal device may obtain, from the current serving network device, the time information and/or the reference point position information for performing network device reselection, so that the terminal device can perform serving network device reselection in time based on the time information and the reference point position information, to reduce a probability of communication interruption caused by in-time learning of a change of the serving network device.

With reference to the first aspect, in some implementations of the first aspect, the second information includes the time information, and the time information indicates a first time period for performing serving network device reselection. In addition, that the terminal device obtains the first information in the first cell based on the second information includes: The terminal device obtains the first information in the first cell in the first time period.

With reference to the first aspect, in some implementations of the first aspect, the reference point position information includes a reference point position and a position threshold. In addition, that the terminal device obtains the first information in the first cell based on the second information includes: The terminal device obtains the first information in the first cell when a distance between a position of the terminal device and the reference point position is greater than or equal to the position threshold.

With reference to the first aspect, in some implementations of the first aspect, the method further includes: The terminal device receives third information, where the third information includes information about a plurality of beam groups of the first cell, and the plurality of beam groups meet at least one of the following conditions:
at least two beam groups are beam groups of different network devices; and
coverage areas of different beam groups are discontiguous.

According to the foregoing solution, when a plurality of network devices serve different areas of a same cell, areas of the cell served by a same network device may be discontiguous. In this case, neighboring cells and serving beams of the cell in different areas are different, and the contiguous areas of the cell may be served by different network devices. Therefore, the network device may notify, by using the third information, the terminal device of the information about the plurality of beam groups serving the first cell, so that the terminal device can determine a beam group serving the terminal device in the first cell, and perform one or more of beam management, interference measurement, cell handover, or cell reselection based on information about the beam group. This improves mobility management efficiency of the terminal device.

With reference to the first aspect, in some implementations of the first aspect, the method further includes: The terminal device performs one or more of cell handover, cell reselection, beam management, or interference measurement based on the third information.

According to a second aspect, a communication method is provided. The method may be performed by a network device or a module (for example, a chip) configured (or used) in a network device. The following uses an example in which a first network device performs the method for description.

The method includes: A first network device sends first information in a first cell, where the first information indicates the first network device, the first information is broadcast information of the first network device, and the first network device is one of at least one network device that manages the first cell; and the first network device sends system information of the first network device in the first cell.

With reference to the second aspect, in some implementations of the second aspect, the first information is carried on a synchronization signal and/or a physical broadcast channel.

With reference to the second aspect, in some implementations of the second aspect, the first information includes a first identifier or a second identifier, the first identifier is an identifier of the first network device, and the second identifier is a group identifier of a broadcast signal group to which a broadcast signal sent by the first network device in the first cell belongs.

With reference to the second aspect, in some implementations of the second aspect, the system information includes one or more of the following:
configuration information of the synchronization signal sent by the first network device in the first cell;
ephemeris information of the first network device; and
paging resource configuration information of the first network device.

With reference to the second aspect, in some implementations of the second aspect, the method further includes: sending second information, where the second information includes time information and/or reference point position information for the terminal device to perform serving network device reselection in the first cell.

With reference to the second aspect, in some implementations of the second aspect, the second information includes the time information, and the time information indicates a first time period for the terminal device to perform serving network device reselection in the first cell.

With reference to the second aspect, in some implementations of the second aspect, the reference point position information includes a reference point position and a position threshold.

With reference to the second aspect, in some implementations of the second aspect, the method further includes:
sending third information, where the third information includes information about a plurality of beam groups of the first cell, and the plurality of beam groups meet at least one of the following conditions:
at least two beam groups are beam groups of different network devices; and
coverage areas of different beam groups are discontiguous.

With reference to the second aspect, in some implementations of the second aspect, the third information is used by the terminal device to perform one or more of the following operations:
cell handover, cell reselection, beam management, or interference measurement.

According to a third aspect, a communication apparatus is provided. In a design, the apparatus may include modules that are in a one-to-one correspondence with the method/operations/steps/actions described in the first aspect. The modules may be hardware circuits, may be software, or may be implemented by using a combination of a hardware circuit and software. In a design, the apparatus includes a processing unit and a transceiver unit. The processing unit is configured to control the transceiver unit to receive information in a first cell, to obtain first information. The first information indicates a first network device, the first information is broadcast information from the first network device, and the first network device is one of at least one network device that manages the first cell. The processing unit is configured to determine, based on the first information, whether a serving network device of a terminal device in the first cell changes. The processing unit is further configured to obtain system information from the first network device when the serving network device in the first cell changes.

With reference to the third aspect, in some implementations of the third aspect, the first information is carried on a synchronization signal and/or a physical broadcast channel.

With reference to the third aspect, in some implementations of the third aspect, the first information includes a first identifier or a second identifier, the first identifier is an identifier of the first network device, and the second identifier is a group identifier of a broadcast signal group to which a broadcast signal sent by the first network device in the first cell belongs.

With reference to the third aspect, in some implementations of the third aspect, the system information includes one or more of the following:
configuration information of the synchronization signal sent by the first network device in the first cell;
ephemeris information of the first network device; and
paging resource configuration information of the first network device.

With reference to the third aspect, in some implementations of the third aspect, the transceiver unit is configured to receive second information, where the second information includes time information and/or reference point position information for the terminal device to perform serving network device reselection in the first cell. The obtaining unit is specifically configured to obtain the first information in the first cell based on the second information.

With reference to the third aspect, in some implementations of the third aspect, the second information includes the time information, and the time information indicates the first time period for performing serving network device reselection. The obtaining unit is specifically configured to obtain the first information in the first cell in the first time period.

With reference to the third aspect, in some implementations of the third aspect, the reference point position information includes a reference point position and a position threshold. The obtaining unit is specifically configured to obtain the first information in the first cell when a distance between a position of the terminal device and the reference point position is greater than or equal to the position threshold.

With reference to the third aspect, in some implementations of the third aspect, the transceiver unit is further configured to receive third information, where the third information includes information about a plurality of beam groups of the first cell, and the plurality of beam groups meet at least one of the following conditions:
at least two beam groups are beam groups of different network devices; and
coverage areas of different beam groups are discontiguous.

With reference to the third aspect, in some implementations of the third aspect, the processing unit is further configured to perform cell handover or reselection based on the third information.

With reference to the third aspect, in some implementations of the third aspect, the processing unit is further configured to perform beam management and/or interference measurement based on the third information.

According to a fourth aspect, a communication apparatus is provided. In a design, the apparatus may include modules that are in a one-to-one correspondence with the method/operations/steps/actions described in the second aspect. The modules may be hardware circuits, may be software, or may be implemented by using a combination of a hardware circuit and software. In a design, the apparatus includes a transceiver unit, configured to send first information in a first cell, where the first information indicates a first network device, the first information is broadcast information of the first network device, and the first network device is one of at least one network device that manages the first cell. The transceiver unit is further configured to send system information of the first network device in the first cell. Optionally, the communication apparatus further includes a processing unit. The processing unit is configured to control the transceiver unit to receive/send information.

With reference to the fourth aspect, in some implementations of the fourth aspect, the first information is carried on a synchronization signal and/or a physical broadcast channel.

With reference to the fourth aspect, in some implementations of the fourth aspect, the first information includes a first identifier or a second identifier, the first identifier is an identifier of the first network device, and the second identifier is a group identifier of a broadcast signal group to which a broadcast signal sent by the first network device in the first cell belongs.

With reference to the fourth aspect, in some implementations of the fourth aspect, the system information includes one or more of the following:
configuration information of the synchronization signal sent by the first network device in the first cell;
ephemeris information of the first network device; and
paging resource configuration information of the first network device.

With reference to the fourth aspect, in some implementations of the fourth aspect, the transceiver unit is further configured to send second information, where the second information includes time information and/or reference point position information for the terminal device to perform serving network device reselection in the first cell.

With reference to the fourth aspect, in some implementations of the fourth aspect, the second information includes the time information, and the time information indicates a first time period for the terminal device to perform serving network device reselection in the first cell.

With reference to the fourth aspect, in some implementations of the fourth aspect, the reference point position information includes a reference point position and a position threshold.

With reference to the fourth aspect, in some implementations of the fourth aspect, the transceiver unit is further configured to send third information, where the third information includes information about a plurality of beam groups of the first cell, and the plurality of beam groups meet at least one of the following conditions:
at least two beam groups are beam groups of different network devices; and
coverage areas of different beam groups are discontiguous.

With reference to the fourth aspect, in some implementations of the fourth aspect, the third information is used by the terminal device to perform one or more of the following operations:
cell handover, cell reselection, beam management, or interference measurement.

According to a fifth aspect, a communication apparatus is provided, and includes a processor. The processor may implement the method according to any one of the first aspect and the possible implementations of the first aspect. Optionally, the communication apparatus further includes a memory. The processor is coupled to the memory, and may be configured to execute instructions in the memory, to implement the method according to any one of the first aspect or the possible implementations of the first aspect. Optionally, the communication apparatus further includes a communication interface, and a processor is coupled to the communication interface. In embodiments of this application, the communication interface may be a transceiver, a pin, a circuit, a bus, a module, or another type of communication interface. This is not limited.

In an implementation, the communication apparatus is a terminal device. When the communication apparatus is the terminal device, the communication interface may be a transceiver or an input/output interface.

In another implementation, the communication apparatus is a chip disposed in the terminal device. When the communication apparatus is the chip configured in the terminal device, the communication interface may be an input/output interface.

Optionally, the transceiver may be a transceiver circuit. Optionally, the input/output interface may be an input/output circuit.

According to a sixth aspect, a communication apparatus is provided, and includes a processor. The processor may implement the method according to any one of the second aspect and the possible implementations of the second aspect. Optionally, the communication apparatus further includes a memory. The processor is coupled to the memory, and may be configured to execute instructions in the memory, to implement the method according to any one of the second aspect or the possible implementations of the second aspect. Optionally, the communication apparatus further includes a communication interface, and a processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is a chip disposed in a first network device, the communication interface may be an input/output interface.

Optionally, the transceiver may be a transceiver circuit. Optionally, the input/output interface may be an input/output circuit.

According to a seventh aspect, an embodiment of this application provides a communication apparatus, including a logic circuit and a communication interface. The logic circuit is configured to process to-be-processed information to obtain processed information, and the communication interface is configured to obtain the to-be-processed information and/or output the processed information, so that the communication apparatus performs the method according to any one of the first aspect or the second aspect or the possible implementations of the first aspect or the second aspect. Optionally, the communication interface includes an input interface and an output interface.

In an implementation, the communication interface is configured to input first information obtained in a first cell. The first information indicates a first network device, the first information is broadcast information from the first network device, and the first network device is one of at least one network device that manages the first cell. The logic circuit is configured to determine, based on the first information, whether a serving network device of a terminal device in the first cell changes. When the serving network device in the first cell changes, the communication interface is configured to input system information from the first network device.

In another implementation, the communication interface is configured to output first information. The first information indicates a first network device, the first information is broadcast information of the first network device in a first cell, and the first network device is one of at least one network device that manages the first cell. The communication interface is further configured to output system information of the first network device in the first cell. The logic circuit is configured to process information and control the communication interface to input or output information.

According to an eighth aspect, a processor is provided. The processor includes an input circuit, an output circuit, and a processing circuit. The processing circuit is configured to: receive a signal through the input circuit, and transmit a signal through the output circuit, so that the processor performs the method according to any one of the first aspect or the second aspect or the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a ninth aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

According to a tenth aspect, a computer-readable storage medium is provided. The computer-readable storage medium stores a computer program (which may also be referred to as code or instructions). When the computer-readable storage medium is run on a computer, the computer is enabled to perform the method according to any one of the first aspect or the second aspect and the possible implementations of the first aspect or the second aspect.

According to an eleventh aspect, a communication system is provided, including the foregoing at least one terminal device and at least one network device.

### BRIEF DESCRIPTION OF DRAWINGS

FIG. 1 is a diagram of an architecture of a communication system applicable to an embodiment of this application;
FIG. 2 is a diagram of an architecture of an NTN applicable to an embodiment of this application;
FIG. 3 is a diagram of another architecture of an NTN applicable to an embodiment of this application;
FIG. 4 is a diagram of a beam hopping communication technology according to an embodiment of this application;
FIG. 5 is a diagram of a mapping relationship between beam positions and a PCI according to an embodiment of this application;
FIG. 6A and FIG. 6B are a diagram of serving cells of neighboring satellites according to an embodiment of this application;
FIG. 7 is a schematic flowchart of an information transmission method according to an embodiment of this application;
FIG. 8 is a block diagram of a communication apparatus according to an embodiment of this application; and
FIG. 9 is another block diagram of a communication apparatus according to an embodiment of this application.

### DESCRIPTION OF EMBODIMENTS

The following describes the technical solutions in this application with reference to the accompanying drawings.

In this application, "at least one (item)" may be also described as "one (item) or more (items)", and "a plurality of (items)" may be two (items), three (items), four (items), or more (items). This is not limited. "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions of this application, a word such as "first", "second", "A", or "B" may be used to distinguish between technical features with a same or similar function. The word like "first", "second", "A", or "B" does not limit a quantity and an execution sequence. In addition, the word like "first", "second", "A", or "B" does not limit a definite difference. A word like "example" or "for example" is used to represent an example, an evidence, or a description. Any design solution described as "example" or "for example" should not be explained as being more preferred or having more advantages than another design solution. The word like "example" or "for example" is intended to present a related concept in a specific manner for ease of understanding.

The technical solutions in embodiments of this application may be applied to various communication systems, for example, a long term evolution (long term evolution, LTE) system, a 5G system (for example, a new radio (new radio, NR) system in the 5G system), a non-terrestrial network (non-terrestrial network, NTN), and a future communication system, for example, a 6th generation mobile communication system. This is not limited in this application.

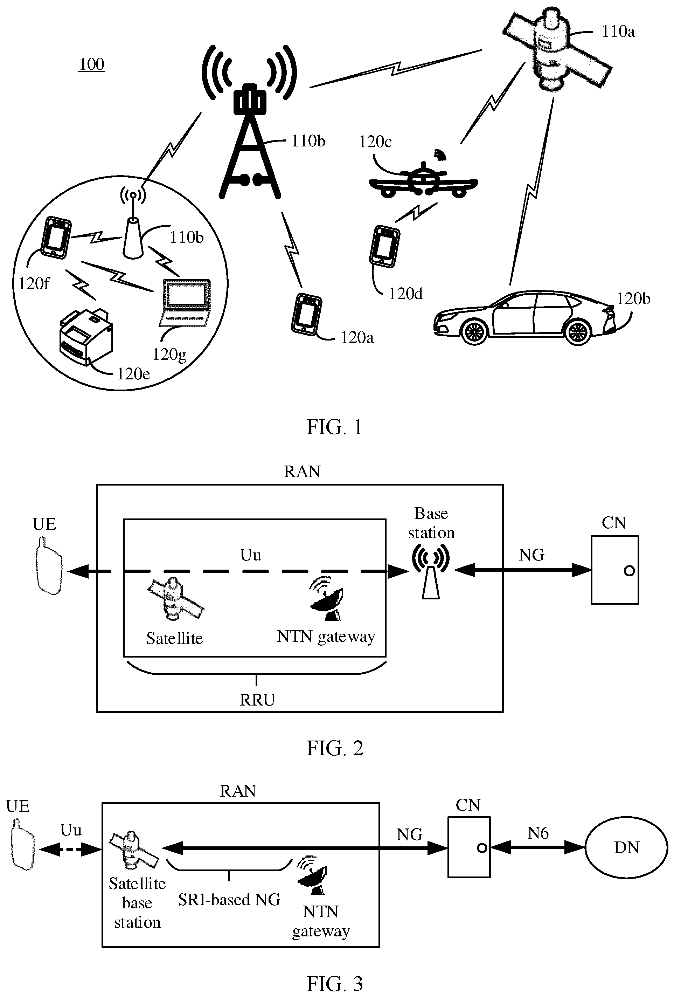

FIG. 1 is a diagram of an architecture of a communication system 100 applicable to an embodiment of this application. As shown in FIG. 1, the communication system 100 may include at least one access network device (for example, 110a, 110b, and 110c in FIG. 1), and may further include at least one terminal device (for example, 120a to 120j in FIG. 1). The access network devices may be connected to each other in a wired or wireless manner. FIG. 1 is merely a diagram. The communication system may further include another network device, for example, may further include a wireless relay device and a wireless backhaul device.

In an NTN network, a satellite may implement transparent payload (transparent payload) transmission or regenerative payload (regenerative payload) transmission.

FIG. 2 is a diagram of an architecture of an NTN applicable to an embodiment of this application. As shown in FIG. 2, user equipment (user equipment, UE) communicates with a ground base station via a ground base station through a universal terrestrial radio access network-user (universal terrestrial radio access network-user, Uu) interface. A satellite may implement transparent payload transmission between a user and the ground base station. The satellite and an NTN gateway may be considered as a remote radio unit (remote radio unit) of the ground base station, and implement transparent forwarding of a signal. In other words, the satellite supports only functions such as radio frequency filtering and frequency conversion and amplification, where a signal waveform is unchanged. Forwarding of the satellite is transparent to a terminal device. The ground base station may communicate with a core network (core network, CN) through a next generation network (next generation, NG) interface, and exchange, through the NG interface, non-access stratum (non-access stratum, NAS) signaling of the core network and service data of the UE.

FIG. 3 is a diagram of another architecture of an NTN applicable to an embodiment of this application. As shown in FIG. 3, a satellite has some or all functions of an access network device, and may be referred to as a satellite base station. The satellite can provide a radio access service, and schedule a radio resource for a terminal device that accesses a network via the satellite base station. The satellite base station communicates with UE through a Uu interface. The satellite base station may communicate with a CN through an NG interface, and the satellite base station and the core network may exchange, through the NG interface, NAS signaling and service data of the UE. A satellite radio interface (satellite radio interface, SRI) is a feeder link between an NTN gateway and the satellite. In FIG. 3, the SRI interface may be used as a part of the NG interface to implement communication and interaction between the satellite and the core network.

A network device provided in embodiments of this application may be an access network device, for example, a base station (base station), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may alternatively be a macro base station (for example, 110b in FIG. 1), and the access network device may alternatively be a micro base station or an indoor base station (for example, 110c in FIG. 1), or may be a relay node or a donor node. The network device may alternatively be a satellite (for example, 110a in FIG. 1 or the satellite base station in FIG. 2) or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, or a high elliptical orbit (high elliptical Orbit, HEO) satellite. For example, the LEO satellite usually has an orbital altitude range of 500 km to 1500 km and an orbital periodicity (a periodicity of rotation around the earth) of approximately 1.5 hours to 2 hours. The LEO satellite moves relative to the ground. As the satellite moves, a ground area covered by the LEO satellite also changes. The GEO satellite usually has an orbital altitude of 35,786 km and an orbital periodicity of 24 hours. A specific technology and a specific device form that are used by the access network device are not limited in this application.

In embodiments of this application, some or all functions of the network device may be on a non-terrestrial network (non-terrestrial network, NTN) platform (where the NTN platform includes but is not limited to a satellite, an unmanned aircraft system (unmanned aircraft system, UAS), a high altitude communication platform (high altitude platform station, HAPS), and the like), or some or all functions of the network device are on the ground, and the NTN platform is responsible for forwarding a signal between the UE and the access network device.

The terminal device provided in embodiments of this application may also be referred to as a terminal, UE, a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D) communication, vehicle to everything (vehicle to everything, V2X) communication, machine-type communication (machine-type communication, MTC), an internet of things (internet of things, IOT), virtual reality, augmented reality, industrial control, self-driving, telemedicine, a smart grid, smart furniture, smart office, smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an unmanned aerial vehicle, a helicopter, an airplane (for example, 120c in FIG. 1), a ship, a robot, a mechanical arm, a smart home device (for example, a printer 120e in FIG. 1), or the like. A specific technology and a specific device form used by the terminal device are not limited in this application.

The network device and/or the terminal device may be at fixed positions, or may be movable. The network device and/or the terminal device may be deployed terrestrially, including indoors or outdoors, or may be handheld or vehicle-mounted, may be deployed on a water surface, or may be deployed on an airplane, a balloon, and an artificial satellite in the air. An environment/scenario at which the network device and the terminal device are located are not limited in this application. The network device and the terminal device may be deployed in a same environment/scenario or different environments/scenarios. For example, the network device and the terminal device are both deployed terrestrially. Alternatively, the network device is deployed terrestrially, and the terminal device is deployed on the water surface. Examples are not enumerated.

The following describes related technologies and terms in embodiments of this application terminology.

### 1. Beam hopping communication technology

A coverage area of a single satellite is very wide, which can reach thousands or even tens of thousands of kilometers, and a coverage area of a single beam is at least tens to thousands of meters. Therefore, to support wide-area coverage, hundreds or even thousands of beams usually need to be configured for a single satellite, which poses a great challenge to load of the satellite (especially an LEO satellite).

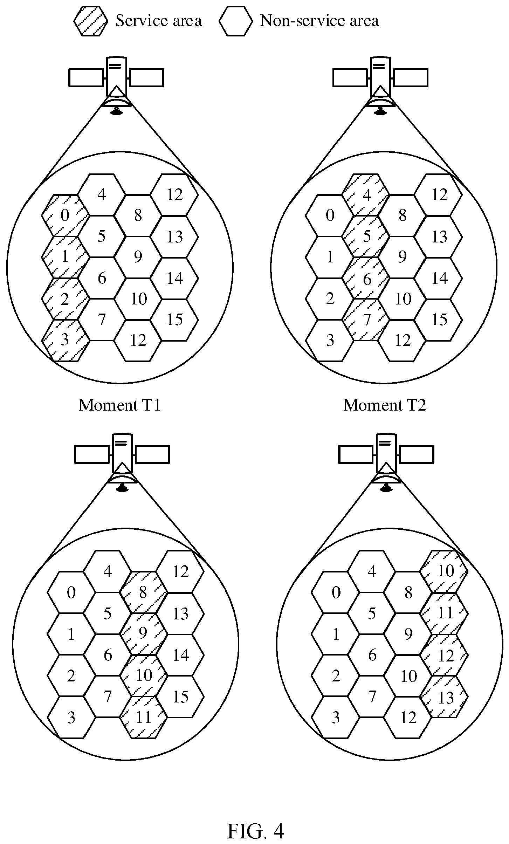

To alleviate a contradiction between low load and wide-area coverage of a single satellite, a beam hopping communication technology emerges. A few beams (for example, dozens of beams) are configured for a single satellite, and serve all coverage areas of the single satellite through time division. A coverage area of one beam is referred to as one beam position. For example, at a same moment, a satellite can serve at four beam positions by using only four beams. As shown in FIG. 4, at a moment T1, the satellite uses four beams: a beam 0, a beam 1, a beam 2, and a beam 3 to cover respective corresponding beam positions; and at a moment T2, the satellite uses four beams: a beam 4, a beam 5, a beam 6, and a beam 7 to cover respective corresponding beam positions. By analogy, all areas (namely, 16 beam positions) covered by the single satellite are served in a time division manner of T1, T2, T3, and T4.

### 2. Manner of mapping between beams position and a physical cell identifier (physical cell identification, PCI)

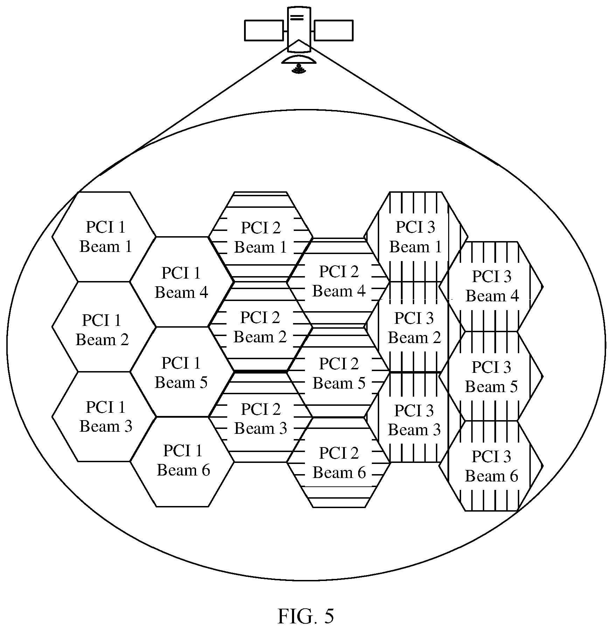

The manner of mapping between beam positions (or beams) and a PCI in embodiments of this application is that a plurality of beam positions correspond to one PCI, a beam is in a one-to-one correspondence with a beam position, and a plurality of beams correspond to one PCI. In other words, a coverage area of one cell includes a plurality of beam positions. As shown in FIG. 5, a single satellite can cover 18 beam positions. At a same moment, the satellite can provide serves respectively at six beam positions by using six beams (for example, a beam 1 to a beam 6), and the six beam positions correspond to one PCI. In other words, the six beam positions are a coverage area of one cell identified by the PCI. As shown in FIG. 5, coverage areas of cells whose identifiers are a PCI 1, a PCI 2, and a PCI 3 each include six beam positions. Compared with a mapping manner in which one beam position corresponds to one PCI, the mapping manner in which one PCI corresponds to a plurality of beam positions can reduce a quantity of cells and lower a requirement on a processing capability of a satellite for processing broadcast information of different cells, resource scheduling, and the like.

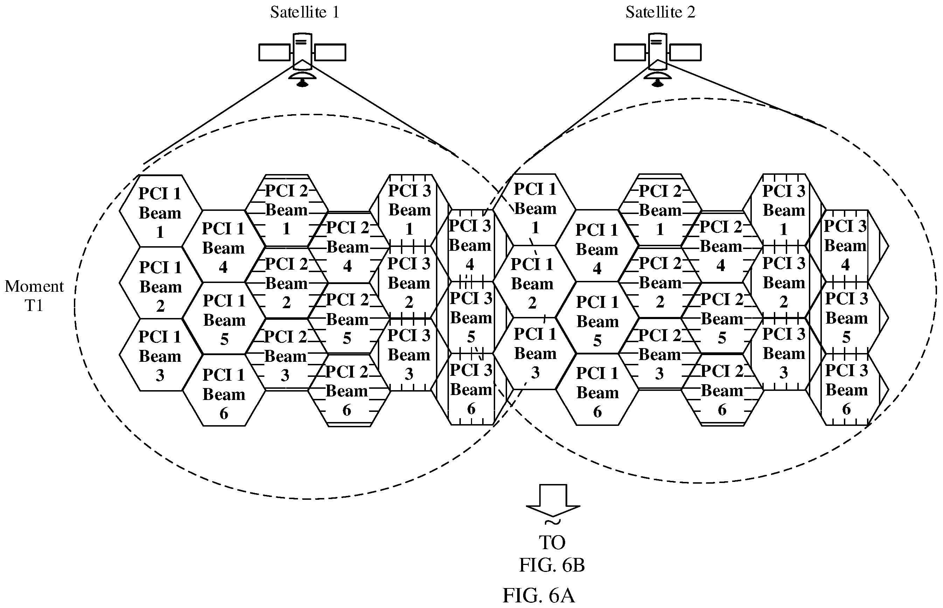

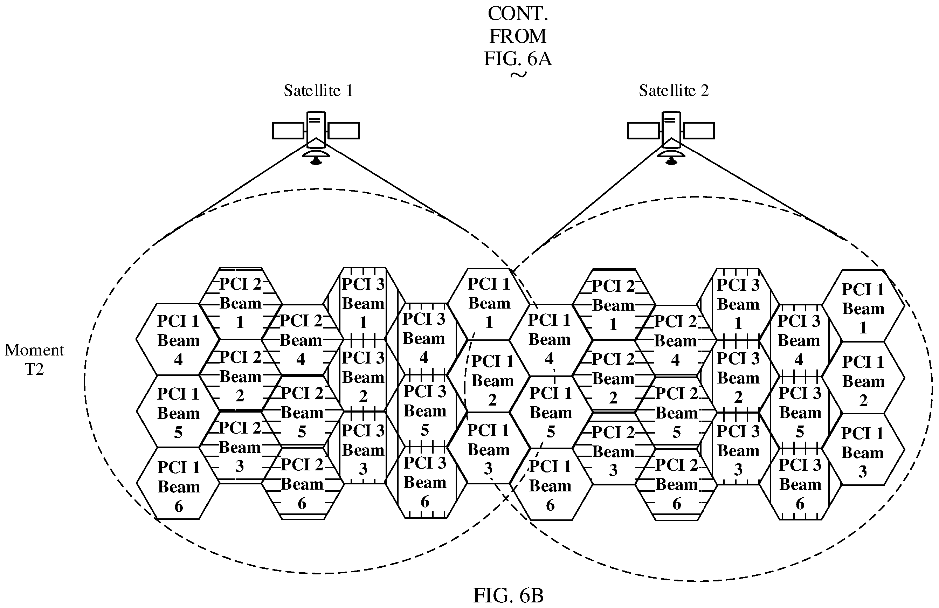

Binding a PCI to a geographical position can avoid a cell change of a terminal device at a same position. When the PCI is bound to the geographical position and the mapping manner in which a plurality of beam positions correspond to one PCI is used, as the satellite moves relative to the ground, a same PCI in a coverage area of a satellite may correspond to a plurality of discontiguous areas. As shown in FIG. 6A and FIG. 6B, at a moment T1, a same PCI in a coverage area of a satellite 1 correspond to a plurality of contiguous beam positions, and a same PCI in a coverage area of a satellite 2 correspond to a plurality of contiguous beam positions. However, as the satellite 1 and the satellite 2 move relative to the ground, at a moment T2, an area corresponding to a PCI 1 served by the satellite 1 by using a beam 1, a beam 2, and a beam 3 is discontiguous with an area corresponding to the PCI 1 served by the satellite 1 by using a beam 4, a beam 5, and a beam 6. A PCI 1 in the coverage area of the satellite 2 also corresponds to two discontiguous areas. Areas corresponding to a same PCI in the coverage areas of the satellite 1 and the satellite 2 may be contiguous. As shown in FIG. 6A and FIG. 6B, the area corresponding to the PCI 1 served by the satellite 1 by using the beam 1, the beam 2, and the beam 3 is adjacent to an area corresponding to the PCI 1 served by the satellite 2 by using the beam 4, the beam 5, and the beam 6. As a result, a satellite that serves a terminal device in a cell identified by a same PCI may change. For example, at the moment T1, a terminal device is located at a beam position corresponding to the PCI 1 served by using the beam 2 of the satellite 2. Due to movement of the satellites, a satellite that provides a service at the beam position at the moment T2 changes from the satellite 1 to the satellite 2. For another example, in a cell identified by the PCI 1, because the terminal device moves, for example, at the moment T2, the terminal device moves from a beam position at which the terminal device is served by using the beam 5 of the satellite 2 to a beam position at which the terminal device is served by using the beam 2 of the satellite 1, a serving satellite of the terminal device in an area corresponding to a same PCI changes from the satellite 2 to the satellite 1.

For a case in which a network device (for example, a satellite) that provides a communication service for the terminal device in a cell identified by a same PCI may change, a corresponding mobility solution is further required, so that the terminal device can obtain updated related information of the serving network device in time, and the network device provides the communication service for the terminal device.

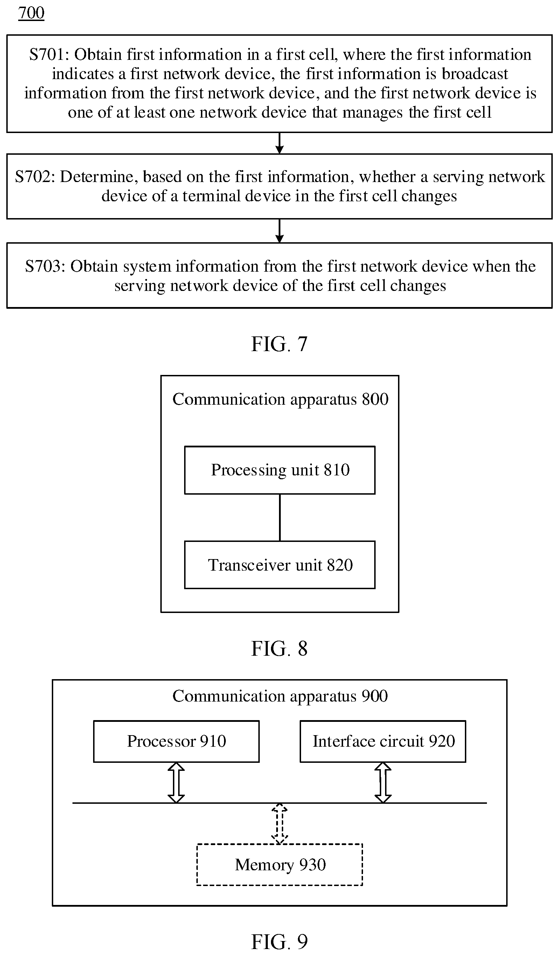

FIG. 7 is a schematic flowchart of an information transmission method 700 according to an embodiment of this application. The information transmission method 700 shown in FIG. 7 may be performed by a terminal device or an apparatus (for example, a chip or a chip module) configured in the terminal device. The following uses an example in which the terminal device performs the information transmission method 700 for description. The method includes but is not limited to the following steps.

S701: The terminal device obtains first information in a first cell, where the first information indicates a first network device, the first information is broadcast information from the first network device, and the first network device is one of at least one network device that manages the first cell.

One cell (namely, a same PCI) may be managed by one or more network devices. As shown in FIG. 6A and FIG. 6B, at the moment T2, the cell whose identifier is the PCI 1 is managed by two network devices: the satellite 1 and the satellite 2, and different network devices manage different areas of the cell whose identifier is the PCI 1. The network device broadcasts, in a managed cell, broadcast information indicating the network device. For example, the first network device broadcasts the first information in the first cell, and the first information indicates the first network device. In this way, the terminal device may determine, based on the obtained first information, that the terminal device is located in a coverage area of the first network device, and the first network device may provide a communication service. As shown in FIG. 6A and FIG. 6B, the satellite 1 broadcasts, within a coverage area (namely, each cell managed by the satellite 1), broadcast information indicating the satellite 1, and the satellite 2 broadcasts, within a coverage area (namely, each cell managed by the satellite 2), broadcast information indicating the satellite 2.

In an example, the first information may include a first identifier, and the first identifier is an identifier of the first network device.

For example, the first identifier may be an identifier of the first network device in an area in which the first network device is located. For example, a plurality of network devices are included in the area in which the first network device is located, and at least network devices that are in the area and whose coverage areas are adjacent have different identifiers in the area. The terminal device may distinguish between different network devices based on the identifiers. The network devices may determine respective identifiers through interaction, or the identifiers may be preconfigured for the network devices during network planning and setting. For another example, the first identifier may be a globally unique identifier of the first network device. In this way, the terminal device may determine, by obtaining the identifier of the network device in the first information, whether a serving network device changes, so that the terminal device can perform time-frequency synchronization with an updated serving network device in time, and obtain related information of the updated serving network device, and the updated serving network device provides a communication service for the terminal device.

In another example, the first information may include a second identifier, and the second identifier is a group identifier of a broadcast signal group sent by the first network device in the first cell.

A broadcast signal sent by a network device in a cell belongs to a broadcast signal group. The network device broadcasts a group identifier of the broadcast signal group in the cell, and implicitly indicates the network device by using the group identifier. For example, the first network device broadcasts, in the first cell, the group identifier of the broadcast signal group sent by the first network device in the first cell. For example, the broadcast signal may be a synchronization signal. As shown in FIG. 6A and FIG. 6B, the satellite 1 may send a group identifier 1 in the cell whose identifier is the PCI 1, and the group identifier 1 identifies a group identifier of a synchronization signal group to which a synchronization signal sent by the satellite 1 in the cell whose identifier is the PCI 1 belongs. For example, synchronization signals sent in the cell whose identifier is the PCI 1 by using the beam 1 to a beam 6 of the satellite 1 belong to one synchronization signal group, and a group identifier of the synchronization signal group is the group identifier 1. The satellite 2 may send a group identifier 2 in the cell whose identifier is the PCI 1, and the group identifier 1 identifies a group identifier of a synchronization signal group to which a synchronization signal sent by the satellite 1 in the cell whose identifier is the PCI 1 belongs. For example, synchronization signals sent in the cell whose identifier is the PCI 1 by using a beam 1 to the beam 6 of the satellite 2 belong to one synchronization signal group, and a group identifier of the synchronization signal group is the group identifier 2. In this way, the terminal device may determine, by obtaining the group identifier in the first information, whether a serving network device changes, and obtain related information of an updated serving network device, and the updated serving network device provides a communication service for the terminal device.

For example, the first information may be carried on a synchronization signal or a physical broadcast channel (physical broadcast channel, PBCH).

For example, the first information may be carried in a synchronization signal broadcast by the first network device. The synchronization signal may be a synchronization signal in a synchronization signal and physical broadcast channel block (synchronization signal and PBCH block, SSB). For example, the first information may be carried in a primary synchronization signal (primary synchronization signal, PSS) and/or a secondary synchronization signal (secondary synchronization signal, SSS) in an SSB broadcast by the first network device. For example, a sequence used by the PSS and/or the SSS in the SSB broadcast by the first network device may indicate the first network device. In other words, different network devices (or a plurality of network devices with adjacent coverage areas) may use different PSS and/or SSS sequences. Alternatively, the first information may be used as a scrambling code sequence to scramble a PSS sequence and/or an SSS sequence, and different network devices (or a plurality of network devices with adjacent coverage areas) use different scrambling code sequences of synchronization signals. A sequence used by the first information may be an m-sequence, a Gold sequence, or a Zadoff-Chu sequence. However, this application is not limited thereto.

For another example, the first information may be carried on a PBCH broadcast by the first network device. For example, the first information may be a field in a master information block (master information block, MIB) on the PBCH, and the field indicates the first network device. Alternatively, the first information may be used as a scrambling code sequence of a PBCH. For example, the first information is used as a scrambling code sequence of a cyclic redundancy check (cyclic redundancy check, CRC) field of information on the PBCH.

In specific implementation, the first information may alternatively be carried on another signal, channel, or message. For example, the first information may be carried in system information or used as a scrambling code sequence of the system information. A form of a specific signal, channel, or message that carries the first information is not limited in this application.

In an implementation, the terminal device receives second information, where the second information includes time information and/or position information for the terminal device to perform serving network device reselection in the first cell. The terminal device obtains the first information in the first cell based on the second information.

For example, the terminal device is within a coverage area of a second network device, and the second network device provides a communication service for the terminal device. The second network device may send the second information to the terminal device, so that the terminal device may receive, in the first cell based on the second information, broadcast information indicating the network device, to determine whether the serving network device changes.

The second information may include the time information for the terminal device to perform serving network device reselection in the first cell. In an example, the time information may indicate a first time period for performing serving network device reselection. That the terminal device performs serving network device reselection in the first time period, for example, performs serving network device reselection includes: The terminal device detects, in the first time period, the broadcast information indicating the network device, to obtain the first information. In another example, the time information may indicate a second time period, and the second time period may be a serving time period of a current serving network device (for example, the second network device) or a time period in which quality of communication between the terminal device and the current serving network device meets a communication requirement. The terminal device may determine to perform serving network device reselection after the second time period (that is, after the service time period of the current serving network device), to obtain the first information.

For example, a manner in which the time information indicates a time period may be indicating a start moment and duration of the time period, or indicating a start moment and an end moment of the time period. A moment indicated by the time information may be universal time coordinated (universal time coordinated, UTC). Alternatively, a manner in which the time information indicates a time period may be a manner of indicating frame numbers of a start system frame and an end system frame that correspond to the time period, or a manner of indicating a frame number of a start system frame corresponding to the time period and duration corresponding to the time period. The duration may be duration in a unit of microsecond, millisecond, or second, or the duration may be a quantity of time units such as a frame, a slot, or an orthogonal frequency division multiplexing (orthogonal frequency division multiplexing, OFDM) symbol.

The second information may include the position information for the terminal device to perform serving network device reselection in the first cell. The position information may include a reference point position and a position threshold. When a distance between a position of the terminal device and the reference point position is greater than or equal to the position threshold, the terminal device performs serving network device reselection, and the terminal device detects information indicating the network device, to obtain the first information.

The second information may include both the time information and the position information. When a time condition or a position condition is met, the terminal device performs serving network device reselection.

In another implementation, the terminal device may periodically detect the information indicating the network device, to obtain the first information.

For example, a period in which the terminal device detects the information indicating the network device may be preconfigured or predefined by the network device.

S702: The terminal device determines, based on the first information, whether the serving network device of the terminal device in the first cell changes.

The terminal device may determine, based on the first information, whether the network device indicated by the first information is the same as a network device indicated by information received last time, to determine whether the serving network device of the terminal device in the first cell changes. For example, information that indicates a network device and that is received by the terminal device in the first cell last time indicates the second network device, the terminal device maintains time-frequency synchronization with the second network device, and the second network device provides a communication service for the terminal device. After receiving the first information, the terminal device may determine that the serving network device changes from the second network device to the first network device. Alternatively, information that indicates a network device and that is received by the terminal device in the first cell last time also indicates the first network device, the terminal device may determine that the serving network device in the first cell does not change.

For example, as shown in FIG. 6A and FIG. 6B, the terminal device is located, at the moment T1, in the cell whose identifier is the PCI 1 and that is served by using the beam 1 of the satellite 2, a network device indicated by broadcast information (namely, an example of the first information) received by using the beam 1 of the satellite 2 is the satellite 2, the terminal device maintains time-frequency synchronization with the satellite 2, and the satellite 2 provides a communication service for the terminal device. At the moment T2, the terminal device receives broadcast information sent by using the beam 1 of the satellite 1, a network device indicated by the broadcast information is the satellite 1, and the terminal device may determine that the serving network device changes from the satellite 2 to the satellite 1.

S703: The terminal device obtains system information from the first network device when the serving network device of the first cell changes.

If the terminal device determines, in S702, that the serving network device of the terminal device in the first cell changes, the terminal device obtains the system information from the first network device. That the terminal device obtains the system information from the first network device may include: The terminal device performs time-frequency synchronization with the first network device, and receives the system information from the first network device after completing time-frequency synchronization with the first network device.

By way of example, and not limitation, the system information of the first network device may include one or more of the following:
configuration information of the synchronization signal sent by the first network device in the first cell, and ephemeris information or paging resource configuration information of the first network device.

The terminal device may be a terminal device in an idle state (for example, a radio resource control (radio resource control, RRC)-idle state (RRC-idle state)), and determines, by detecting broadcast information, whether a serving network device in a same cell changes. When the serving network device changes, the terminal device obtains system information of an updated serving network device, so that the updated serving network device provides a communication service for the terminal device.

For example, the first network device is a satellite, and the system information obtained by the terminal device from the first network device includes the ephemeris information of the first network device. The ephemeris information may include but is not limited to one or more of position information, speed information, and beam reference point position information of the first network device at different moments.

For another example, the system information obtained by the terminal device from the first network device includes the paging resource configuration information. The terminal device may determine a paging resource based on the paging resource configuration information, to detect a paging message.

For another example, the system information of the first network device obtained by the terminal device includes the configuration information of the synchronization signal, so that the terminal device can measure signal quality. For example, the configuration information may be an SSB-based measurement timing configuration (SSB-based measurement timing configuration, SMTC), and the terminal device may determine, based on the configuration information, a time period for measuring an SSB.

According to the foregoing solution, the terminal device detects the information indicating a network device, and obtains the first information, to determine whether the serving network device changes, so that the terminal device can learn in time that the serving network device changes in the same cell, and obtain related information of the changed serving network device in time. In this way, the updated serving network device provides the communication service for the terminal device, so that communication reliability can be improved.

In an implementation, the terminal device receives, in the first cell, third information from the first network device, where the third information includes information about a plurality of beam groups of the first cell, and the plurality of beam groups meet at least one of the following conditions:
at least two beam groups are beam groups of different network devices; and
coverage areas of different beam groups are discontiguous.

For example, as shown in FIG. 6A and FIG. 6B, at the moment T2, the cell whose identifier is the PCI 1 (namely, an example of the first cell) is served by two network devices, and the cell whose identifier is the PCI 1 and that is served by a same network device include discontiguous areas. Therefore, serving network devices of the terminal device in different areas of the cell whose identifier is the PCI 1 may be different, and neighboring cells may also be different. The network device may provide information about a plurality of beam groups in a serving cell for the terminal device by using the third information, and the terminal device may perform one or more of cell handover, cell reselection, beam management, and interference measurement based on the third information. For example, at the moment T2, an area of a cell whose identifier is the PCI 1 and that is covered by the satellite 1 by using the beam 4 to the beam 6 is contiguous, and the beam 4 to the beam 6 belong to a same beam group, for example, a beam group 1. An area of a cell whose identifier is the PCI 1 and that is covered by the satellite 1 by using the beam 1 to the beam 3 is contiguous, and is contiguous with an area of a cell whose identifier is the PCI 1 and that is covered by the satellite 2 by using the beam 4 to the beam 6. However, because the areas are service areas of different satellites, the beams belong to different beam groups. For example, the beam 1 to the beam 3 of the satellite 1 belong to a beam group 2, and the beam 4 to the beam 6 of the satellite 2 belong to a beam group 3. In addition, the beam 1 to the beam 3 of the satellite 2 belong to a beam group 4, where an area of a cell whose identifier is the PCI 1 and that is covered by using the beam 1 to the beam 3 of the satellite 2 is contiguous with the area of the cell whose identifier is the PCI 1 and that is covered by using the beam 4 to the beam 6 of the satellite 2.

For example, the third information includes one or more of the following:
an identifier of a beam group, an identifier of a beam in the beam group, random access channel (random access channel, RACH) configuration information corresponding to the beam group, bandwidth part (bandwidth part, BWP) information, cell handover or reselection position information corresponding to the beam group, serving time information of the beam group, information about a network device to which the beam group belongs, neighboring cell information of the first cell corresponding to the beam group, a time advance (time advance, TA), measurement configuration information, or paging resource configuration information.

For example, as shown in FIG. 6A and FIG. 6B, at the moment T2, the satellite 1 and the satellite 2 may broadcast or unicast, in the cell whose identifier is the PCI 1, information about a plurality of beam groups of the cell whose identifier is the PCI 1. For example, the information about the plurality of beam groups includes information shown in Table 1. A serving satellite of a beam group whose group identifier is 1 is the satellite 1, and the beam group includes the beam 4 to the beam 6 of the satellite 1. Information about the beam group 1 may further include ephemeris information of the satellite 1. The information about the beam group may further include reference point position information for cell handover or reselection. For example, the reference point position information of the beam group 1 includes a reference position 1 and a position threshold 1. The terminal device served by using the beam group 1 may compare whether a distance between the position of the terminal device and the reference position 1 is greater than or equal to the position threshold 1. If the distance is greater than or equal to the position threshold 1, the terminal device performs cell handover or reselection. The information about the beam group further includes serving time. For example, if the serving time of the beam group 1 is from a moment t1 to a moment t2, the terminal device may perform cell handover or reselection after the serving time of the beam group 1. Specifically, the terminal device may set and start a timer based on the serving time that is of the beam group 1 and that is provided in the third information. The timer stops at the moment t2, and the terminal device performs the cell handover or reselection after the timer stops. It should be noted that moments (for example, t1 to t8) indicating serving time of beam groups shown in Table 1 are merely examples. Start moments or end moments of the serving time of the beam groups may be the same or different, and the serving time may overlap or not overlap. This may be determined based on a specific situation of each beam group during specific implementation.

The information about the beam group may further include information about a neighboring cell of a cell whose identifier is the PCI 1 and that is served by using each beam group. For example, a neighboring cell of a cell whose identifier is the PCI 1 and that is served by using the beam group 1 is a cell whose identifier is a PCI 2, and a neighboring cell of a cell whose identifier is the PCI 1 and that is served by using the beam group 2 is a cell whose identifier is a PCI 3. The terminal device may perform neighboring cell measurement after the serving time of the beam group or when a distance between the position of the terminal device and a reference point is greater than or equal to a position threshold. The information about the beam group may further include an SMTC used by the terminal device to measure signal quality, and the information about the beam group may further include a k offset (k_offset) and TA information. The terminal device may perform time sequence adjustment based on the k_offset and the TA, to implement timing synchronization with the network device.

**Table 1**

| Group identifier | Serving satellite | Ephemeris information | Included beam | Reference point position information for cell handover or reselection | Serving time of a beam group | Neighboring cell | Other configuration information |
|---|---|---|---|---|---|---|---|
| 1 | Satellite 1 | Ephemeris information 1 | 4, 5, and 6 | Reference position 1 and position threshold 1 | [t1, t2] | PCI 2 | SMTC 1, k_offset 1, and TA 1 |
| 2 | Satellite 1 | Ephemeris information 1 | 1, 2, and 3 | Reference position 2 and position threshold 2 | [t3, t4] | PCI 3 | SMTC 2, k_offset 2, and TA 2 |
| 3 | Satellite 2 | Ephemeris information 2 | 4, 5, and 6 | Reference position 3 and position threshold 3 | [t5, t6] | PCI 2 | SMTC 3, k_offset 3, and TA 3 |
| 4 | Satellite 2 | Ephemeris information 2 | 1, 2, and 3 | Reference position 4 and position threshold 4 | [t7, t8] | PCI 3 | SMTC 4, k_offset 4, and TA 4 |

According to the foregoing solution, for a case in which different areas of a cell may be served by using one or more beams, the network device may provide information about a plurality of beam groups in a cell for the terminal device. In this way, the terminal device can determine a serving beam group, and perform one or more of cell handover, cell reselection, beam management, or interference measurement based on information about the beam group, so that the network device effectively performs mobility management, and communication continuity and reliability of the terminal device are improved.

It may be understood that, to implement the functions in the foregoing embodiments, a network device and a terminal device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 8 and FIG. 9 each are a diagram of a structure of a possible communication apparatus according to an embodiment of this application. The communication apparatuses may be configured to implement the functions of the terminal device or the network device in the foregoing method embodiments, and therefore can also implement the beneficial effects in the foregoing method embodiments. In this embodiment of this application, the communication apparatus may be one of the terminal devices 120a to 120j shown in FIG. 1, or may be the network device 110a or 110b shown in FIG. 1, or may be a module (for example, a chip) used in a terminal device or a network device.

As shown in FIG. 8, the communication apparatus 800 includes a processing unit 810 and a transceiver unit 820. The communication apparatus 800 is configured to implement functions of the terminal device or the network device in the method embodiment shown in FIG. 7.

When the communication apparatus 800 is configured to implement the functions of the terminal device in the method embodiment shown in FIG. 7,
the processing unit 810 is configured to control the transceiver unit 820 to receive information in a first cell, to obtain first information. The first information indicates a first network device, the first information is broadcast information from the first network device, and the first network device is one of at least one network device that manages the first cell. The processing unit 810 is configured to determine, based on the first information, whether a serving network device of the terminal device in the first cell changes. The processing unit 810 is further configured to obtain system information from the first network device when the serving network device in the first cell changes.

When the communication apparatus 800 is configured to implement the functions of the network device in the method embodiment shown in FIG. 7,
the transceiver unit 820 is configured to send first information in a first cell. The first information indicates a first network device, the first information is broadcast information of the first network device, and the first network device is one of at least one network device that manages the first cell. The transceiver unit 820 is further configured to send system information of the first network device in the first cell. Optionally, the communication apparatus further includes a processing unit. The processing unit 810 is configured to control the transceiver unit 820 to receive/send information.

For more detailed descriptions of the processing unit 810 and the transceiver unit 820, refer to related descriptions in the method embodiment shown in FIG. 7.

As shown in FIG. 9, the communication apparatus 900 includes a processor 910 and an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data required by the processor 910 to run instructions, or store data generated after the processor 910 runs instructions.

When the communication apparatus 900 is configured to implement the method shown in FIG. 7, the processor 910 is configured to perform a function of the processing unit 810, and the interface circuit 920 is configured to perform a function of the transceiver unit 820.

When the communication apparatus is a chip used in a terminal device, the chip in the terminal device implements the functions of the terminal device in the foregoing method embodiments. The chip in the terminal device obtains information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (Central Processing unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a network device or a terminal device. Alternatively, the processor and the storage medium may exist in a network device or a terminal device as discrete components.

An embodiment of this application provides a communication apparatus, including a logic circuit and a communication interface. The logic circuit is configured to process to-be-processed information to obtain processed information, and the communication interface is configured to obtain the to-be-processed information and/or output the processed information, so that the communication apparatus performs the method provided in the embodiment shown in FIG. 7. Optionally, the communication interface includes an input interface and an output interface.

In an implementation, the communication interface is configured to input first information obtained in a first cell. The first information indicates a first network device, the first information is broadcast information from the first network device, and the first network device is one of at least one network device that manages the first cell. The logic circuit is configured to determine, based on the first information, whether a serving network device of a terminal device in the first cell changes. When the serving network device in the first cell changes, the communication interface is configured to input system information from the first network device.

In another implementation, the communication interface is configured to output first information. The first information indicates a first network device, the first information is broadcast information of the first network device in a first cell, and the first network device is one of at least one network device that manages the first cell. The communication interface is further configured to output system information of the first network device in the first cell. The logic circuit is configured to process information and control the communication interface to input or output information.

All or some of the foregoing embodiments may be implemented by using software, hardware, firmware, or any combination thereof. When being implemented by using the software, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An information transmission method, comprising:
obtaining first information in a first cell, wherein the first information indicates a first network device, the first information is broadcast information from the first network device, and the first network device is one of at least one network device that manages the first cell;
determining, based on the first information, whether a serving network device of a terminal device in the first cell changes; and
obtaining system information from the first network device when the serving network device in the first cell changes.

2. The method according to claim 1, wherein the first information is carried on a synchronization signal and/or a physical broadcast channel.

3. The method according to claim 1 or 2, wherein the first information comprises a first identifier or a second identifier, the first identifier is an identifier of the first network device, and the second identifier is a group identifier of a broadcast signal group to which a broadcast signal sent by the first network device in the first cell belongs.

4. The method according to any one of claims 1 to 3, wherein the system information comprises one or more of the following:
configuration information of the synchronization signal sent by the first network device in the first cell;
ephemeris information of the first network device; and
paging resource configuration information of the first network device.

5. The method according to claims 1 to 4, wherein the obtaining first information in a first cell comprises:
receiving second information, wherein the second information comprises time information and/or reference point position information for the terminal device to perform serving network device reselection in the first cell; and
obtaining the first information in the first cell based on the second information.

6. The method according to claim 5, wherein the second information comprises the time information, and the time information indicates a first time period for performing serving network device reselection; and
the obtaining the first information in the first cell based on the second information comprises:
obtaining the first information in the first cell in the first time period.

7. The method according to claim 5, wherein the reference point position information comprises a reference point position and a position threshold; and
the obtaining the first information in the first cell based on the second information comprises:
obtaining the first information in the first cell when a distance between a position of the terminal device and the reference point position is greater than or equal to the position threshold.

8. The method according to any one of claims 1 to 7, wherein the method further comprises:
receiving third information, wherein the third information comprises information about a plurality of beam groups of the first cell, and the plurality of beam groups meet at least one of the following conditions:
at least two beam groups are beam groups of different network devices; and
coverage areas of different beam groups are discontiguous.

9. The method according to claim 8, wherein the method further comprises:
performing cell handover or reselection based on the third information.

10. The method according to claim 8, wherein the method further comprises:
performing beam management and/or interference measurement based on the third information.

11. An information transmission method, comprising:
sending first information in a first cell, wherein the first information indicates a first network device, the first information is broadcast information of the first network device, and the first network device is one of at least one network device that manages the first cell; and
sending system information of the first network device in the first cell.

12. The method according to claim 11, wherein the first information is carried on a synchronization signal and/or a physical broadcast channel.

13. The method according to claim 11 or 12, wherein the first information comprises a first identifier or a second identifier, the first identifier is an identifier of the first network device, and the second identifier is a group identifier of a broadcast signal group to which a broadcast signal sent by the first network device in the first cell belongs.

14. The method according to any one of claims 11 to 13, wherein the system information comprises one or more of the following:
configuration information of the synchronization signal sent by the first network device in the first cell;
ephemeris information of the first network device; and
paging resource configuration information of the first network device.

15. The method according to any one of claims 11 to 14, wherein the method further comprises:
sending second information, wherein the second information comprises time information and/or reference point position information for the terminal device to perform serving network device reselection in the first cell.

16. The method according to claim 15, wherein the second information comprises the time information, and the time information indicates a first time period for the terminal device to perform serving network device reselection in the first cell.

17. The method according to claim 15, wherein the reference point position information comprises a reference point position and a position threshold.

18. The method according to any one of claims 11 to 17, wherein the method further comprises:
sending third information, wherein the third information comprises information about a plurality of beam groups of the first cell, and the plurality of beam groups meet at least one of the following conditions:
at least two beam groups are beam groups of different network devices; and
coverage areas of different beam groups are discontiguous.

19. The method according to claim 18, wherein the third information is used by the terminal device to perform one or more of the following operations:
cell handover, cell reselection, beam management, or interference measurement.

20. An information transmission apparatus, comprising:
a transceiver unit, configured to obtain first information in a first cell, wherein the first information indicates a first network device, the first information is broadcast information from the first network device, and the first network device is one of at least one network device that manages the first cell; and
a processing unit, configured to determine, based on the first information, whether a serving network device of a terminal device in the first cell changes, wherein
the transceiver unit is further configured to obtain system information from the first network device when the serving network device in the first cell changes.

21. An information transmission apparatus, comprising:
a processing unit, configured to determine first information, wherein the first information indicates a first network device, the first information is broadcast information of the first network device, and the first network device is one of at least one network device that manages a first cell; and
a transceiver unit, configured to send the first information in the first cell, wherein
the transceiver unit is further configured to send system information of the first network device in the first cell.

22. A communication apparatus, comprising a processor, wherein the processor is connected to a memory, the memory is configured to store a computer program, and the processor is configured to execute the computer program stored in the memory, to enable the communication apparatus to perform the method according to any one of claims 1 to 19.

23. The apparatus according to claim 22, wherein the processor and the memory are integrated together.

24. A communication apparatus, comprising a logic circuit and a communication interface, wherein the logic circuit is configured to process to-be-processed information to obtain processed information, and the communication interface is configured to obtain the to-be-processed information and/or output the processed information, so that the communication apparatus performs the method according to any one of claims 1 to 19.

25. A computer-readable storage medium, wherein the computer-readable storage medium stores a computer program, and when the computer program is executed, the method according to any one of claims 1 to 19 is implemented.

26. A communication system, wherein the communication system comprises a terminal device and a network device, the terminal device is configured to perform the method according to any one of claims 1 to 10, and the network device is configured to perform the method according to any one of claims 11 to 19.
